Europäisches Patentamt

European Patent Office

Office européen des brevets

(11) Veröffentlichungsnummer : **0 149 141**
**B1**

(12) **EUROPÄISCHE PATENTSCHRIFT**

(45) Veröffentlichungstag der Patentschrift :
04.03.87

(21) Anmeldenummer : 84115271.3

(22) Anmeldetag : 12.12.84

(51) Int. Cl.⁴ : **C 08 L 71/04**, C 08 L 25/14,
C 08 L 51/04

(54) Thermoplastische Formmassen.

(30) Priorität : 22.12.83 DE 3346303

(43) Veröffentlichungstag der Anmeldung :
24.07.85 Patentblatt 85/30

(45) Bekanntmachung des Hinweises auf die Patenterteilung : 04.03.87 Patentblatt 87/10

(84) Benannte Vertragsstaaten :
BE DE FR GB IT NL SE

(56) Entgegenhaltungen :
DE-A- 2 751 328
US-A- 4 128 602
US-A- 4 311 633

(73) Patentinhaber : BASF Aktiengesellschaft
Carl-Bosch-Strasse 38
D-6700 Ludwigshafen (DE)

(72) Erfinder : Hambrecht, Juergen, Dr.
Werderstrasse 30
D-6900 Heidelberg (DE)
Erfinder : Illers, Karl Heinz, Dr.
Huttenstrasse 20
D-6701 Otterstadt (DE)
Erfinder : Echte, Adolf, Dr.
Leuschnerstrasse 42
D-6700 Ludwigshafen (DE)
Erfinder : Swoboda, Johann, Dr.
Neuwiesenstrasse 28
D-6700 Ludwigshafen (DE)

**0 149 141**

**Beschreibung**

Die Erfindung betrifft thermoplastische Formmassen auf der Grundlage von Polyphenylenethern und Styrol-Methylmethacrylat-Copolymerisaten, die gegebenenfalls schlagzäh modifiziert sein können.

Polymermischungen aus Polyphenylenethern und Styrolpolymerisaten sind bekannt und in einer Reihe von Patentschriften beschrieben worden. Zum Stand der Technik nennen wir (1) US-A-3 383 435, (2) DE-A-2 713 430, (3) US-A-4 360 618, (4) EP-B 55 473 und (5) DE-A-3 127 233.

In (1) werden Zusammensetzungen von Polyphenylenethern und Styrolharzen beschrieben. Die Styrolharze können sowohl mit Kautschuk, zumeist Polybutadien, modifiziert sein, es kann aber auch reines Polystyrol eingesetzt werden. Die Hitzebeständigkeit, Chemikalienbeständigkeit und die mechanischen Eigenschaften dieser Mischungen genügen häufig jedoch nicht den Anforderungen.

Ersetzt man die Styrolharze in (1) durch Styrol-Maleinsäureanhydrid-Copolymerisate (S-MSA), wie sie in (2) beschrieben werden, so kann die Wärmeformbeständigkeit und Chemikalienbeständigkeit der Abmischungen verbessert werden. Die mechanischen Eigenschaften dieser Mischungen sind jedoch unbefriedigend.

In (3) werden Polymerisatmischungen aus Polyphenylenethern und Styrol-Acrylnitril-Copolymerisaten beschrieben, die eine hohe Steifigkeit und sehr gute Chemikalienbeständigkeit haben. Die Zähigkeit und auch die Wärmeformbeständigkeit sind noch nicht voll befriedigend.

Polymermischungen aus Polyphenylenethern und Copolymerisaten aus Olefinen und Glycidyl(meth)acrylaten werden in (4) beschrieben. Der Zusatz dieses Copolymerisates verbessert die Verarbeitbarkeit dieses Gemisches, die Wärmeformbeständigkeit und die Steifigkeit wird jedoch verringert.

In (5) werden Mischungen aus Polyphenylenethern, einem EPDM-Polymerisat und zusätzlich schlagzähem Polystyrol sowie Styrol-Butylacrylat-Copolymer beschrieben, die eine hohe Witterungsbeständigkeit und außerdem eine gute Zähigkeit und Verarbeitbarkeit haben. Auch bei diesen Mischungen ist die Wärmeformbeständigkeit und Steifigkeit sowie die Chemikalienbeständigkeit nicht voll befriedigend.

Aufgabenstellung des Anmeldungsgegenstandes sind daher thermoplastische Formmassen auf der Basis von Mischungen aus Polyphenylenethern und Styrolpolymerisaten, die eine ausreichend hohe Wärmeformbeständigkeit bei guter Chemikalienbeständigkeit und ausgewogenen mechanischen Eigenschaften aufweisen.

Diese Aufgabe wird erfindungsgemäß gelöst durch Formmassen, die ein Gemisch aus

(I) 95 bis 5 Gew.% eines Polyphenylenethers und

(II) 5 bis 95 Gew.% eines Copolymerisates, bestehend aus

$A_1$) 85 bis 99 Gew.-Teilen eines monovinylaromatischen Monomeren,
$A_2$) 1 bis 15 Gew.-Teilen Methacrylsäurealkylester mit bis zu 8 C-Atomen im Alkylanteil und
B) 0 bis 20 Gew.-Teile einer Elastomerkomponente mit einer Glastemperatur von $\leq 0\,°C$ enthalten, wobei die Gewichtsteile sich auf 100 Gew.-Teile summieren.

Nachstehend werden die Komponenten der erfindungsgemäßen Formmasse, deren Herstellung und die Herstellung der Formmasse beschrieben.

Komponente I

Die Komponente I der erfindungsgemäßen Formmasse stellt mindestens ein aus einem Polyphenylenether (PPE) aufgebautes Harz dar, das in Mengen von 95 bis 5 Gew.%, vorzugsweise 70 bis 30 Gew.%, jeweils bezogen auf die Mischung aus I + II, vorhanden ist.

Bei den Polyethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyether können in ortho-Stellung zum Sauerstoff, Wasserstoff, Halogen, Kohlenwasserstoffreste, die kein α-ständiges tertiäres Wasserstoffatom besitzen, Halogenkohlenwasserstoffe, Phenylreste und Kohlenwasserstoff-oxi-Reste tragen. So kommen in Frage : Poly(2,6-dichlor-1,4-phenylen)-ether, Poly(2,6-diphenyl-1,4-phenylen)-ether, Poly(2,6-dimethoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)ether eingesetzt. Besonders bevorzugt werden Poly-(2,6-dimethyl-1,4-phenylen)ether mit einer Grenzviskosität zwischen 0,45 und 0,65 dl/g (gemessen in Chloroform bei 30 °C).

Die Polyphenylenether können in bekannter Weise z. B. in Gegenwart von komplexbildenden Mitteln wie Kupferbromid und sek. Dibutylamin, aus den Phenolen hergestellt werden.

Komponente II

2

Die Komponente II der erfindungsgemäßen Formmassen ist ein Styrol-Alkylmethacrylat-Copolymerisat, das gegebenenfalls schlagfest modifiziert sein kann. Das Copolymerisat ist aufgebaut aus den Bestandteilen $A_1$) und $A_2$) und gegebenenfalls B.

Die Komponente II ist in einem Anteil von 5 bis 95 Gew.%, vorzugsweise von 30 bis 70 Gew.%, bezogen auf die Mischung aus I und II in den erfindungsgemäßen Formmassen enthalten.

Der Aufbau der Komponente II ist wie folgt :

Als monovinylaromatische Monomere $A_1$) kommen Styrol, $\alpha$-Methylstyrol oder ein Kern-alkyliertes Styrol mit bis zu 12 Kohlenstoffatomen in Frage. Besonders bevorzugt werden Styrol, $\alpha$-Methylstyrol und para-Methylstyrol.

Als Monomere $A_2$) eignen sich Methacrylsäurealkylester mit bis 8 Kohlenstoffatomen in der Alkylgruppe. Bevorzugt wird Methylmethacrylat.

Die Monomeren $A_1$) und $A_2$) sind in der Komponente II im Verhältnis von 85 bis 99 Gew.-Teilen $A_1$) zu 1 bis 15 Gew.-Teilen $A_2$), vorzugsweise 88 bis 99 Gew.-Teilen $A_2$) zu 1 bis 12 Gewichtsteilen $A_2$) enthalten, wobei sich die Gewichtsteile zu 100 summieren.

Die Bestandteile der Komponente II werden durch kontinuierliche Mischpolymerisation der Monomeren $A_1$) und $A_2$) bei hohen Temperaturen unter starkem Rühren hergestellt. Die Monomeren $A_1$) und $A_2$) werden kontinuierlich in ein Polymerisationsgefäß eingebracht und gleichzeitig wird eine diesen Mengen entsprechende Menge des Polymerisationsgemisches aus dem Gefäß abgezogen (vgl. A. W. Hanson, R. L. Zimmermann, Industrial Eng. Chemistry 49 (1957), Seite 803). Die Bestandteile $A_1$ und $A_2$ können jedoch auch nach allen anderen bekannten Polymerisationsverfahren polymerisiert werden.

Bestandteil B

Der Bestandteil B ist eine Elastomerkomponente, die in den erfindungsgemäßen Formmassen gegebenenfalls enthalten ist. Bestandteil B der Komponente II ist ein Pfropfpolymerisat, das in einem Anteil von 0 bis 20 Gew.-Teilen, insbesondere von 1 bis 18 Gew.-Teilen in der Komponente II enthalten ist, wobei die Gewichtsteile des Bestandteils B sich mit den Gewichtsteilen der Bestandteile $A_1$) und $A_2$) auf 100 Gewichtsteile summieren.

Dieses Pfropfmischpolymerisat ist aufgebaut aus 10 bis 50 Gew.-Teilen, vorzugsweise 15 bis 45 Gew.-Teilen eines Gemisches aus mindestens einem vinylaromatischen Monomeren, das bis zu 12 Kohlenstoffatome enthält, und 0,1 bis 25 Gew.-Teilen, vorzugsweise 5 bis 20 Gew.-Teilen mindestens eines (Meth)acrylsäureesters und/oder von Acrylnitril und/oder von (Meth)acrylsäure und/oder Maleinsäureanhydrid als Pfropfhülle, auf 50 bis 90 Gew.%, insbesondere 60 bis 80 Gew.-Teile einer elastomeren Pfropfgrundlage (Kautschukkomponente).

Diese Kautschukkomponente soll eine Glastemperatur (nach K. H. Illers und H. Breuer, Kolloid-Zeitschrift 176 (1961), Seite 110) haben, die unter 0 °C liegt. Als Kautschuk kommen beispielsweise in Frage : Polybutadien (vgl. DE-A-1 420 775 und DE-A-1 495 089), Copolymerisate aus Butadien und Styrol (vgl. GB-A-649 166), Copolymerisate aus Butadien und Styrol, Polyacrylsäureester, die gegebenenfalls vernetzt sein können (vgl. DE-B-1 138 921, DE-B-1 224 486 oder DE-B-1 260 135) sowie Copolymerisate aus Acrylsäureester und Butadien (vgl. DE-B-1 238 207), ferner Elastomere von Copolymerisaten aus Acrylsäureestern mit Styrol, Acrylnitril und Vinylethern und Copolymerisate aus Ethylen und einem nicht konjugierten Dien (EPDM-Kautschuk) sowie hydrierte Styrol-Butadien-Kautschukpolymerisate.

Die vinylaromatischen Pfropfmonomeren sind Styrol, $\alpha$-Methylstyrol und/oder Kern-alkylierte Styrole mit bis zu 12 C-Atomen ; als polare Monomere kommen (Meth)acrylsäureester von Alkanolen mit bis zu 8 C-Atomen, sowie Acrylnitril, (Meth)acrylsäure oder Maleinsäureanhydrid oder Mischungen davon in Betracht.

Die Herstellung der Pfropfmischpolymerisate B ist an sich bekannt. Sie können z. B. hergestellt werden durch Polymerisation eines Gemisches von Styrol und (Meth)acrylaten in Gegenwart eines Kautschuks. Die Pfropfcopolymerisation kann dabei bekannterweise in Lösung, Suspension oder vorzugsweise in Emulsion erfolgen.

Wesentlich für das Eintreten des Erfolges ist nunmehr, daß die Bestandteile A und B der Komponente II der erfindungsgemäßen Formmasse derart aufgebaut und in der Mischung so aufeinander abgestimmt sind, daß der Absolutbetrag der polaren Monomeren in den Bestandteilen A und B um weniger als 9 differiert.

Die Komponente II der erfindungsgemäßen Formmassen wird vorzugsweise durch Abmischen einer Schmelze der Bestandteile A und B erhalten. Dabei werden die Bestandteile A und B als Schmelze bei Temperaturen zwischen 200 und 260 °C auf Extrudern, Walzen oder Knetern bei Verweilzeiten von einigen Minuten gemischt. Man kann aber auch Lösungen des Bestandteils A und des Pfropfmischpolymerisates B vermischen und die Lösungsmittel anschließend entgasen.

Zusätzlich zu den Komponenten I und II kann die erfindungsgemäße Formmasse gegebenenfalls übliche Zusatzstoffe in wirksamen Mengen enthalten. Als solche Zusatzstoffe seien genannt :

Pigmente, Farbstoffe, Füllstoffe, Flammschutzmittel wie z. B. Triarylphosphate, weitere verträgliche Polymere, Antistatika, Antioxidantien und Schmiermittel.

## 0 149 141

Herstellung der erfindungsgemäßen Formmassen aus den Komponenten I und II

Die Herstellung der erfindungsgemäßen Formmasse kann aus den Komponenten I und II, wie nachstehend beschrieben, erfolgen. Bevorzugt wird jedoch die Herstellung aus den Bestandteilen A, B und Komponente I und gegebenenfalls anderen Zusatzstoffen, nämlich durch Mischen der Weich- und Hartkomponente (der Komponente II) und der Polyphenylenether. Üblicherweise erfolgt die Herstellung auf Vorrichtungen, die ein homogenes Mischen zulassen, wie Knetern, Extrudern oder Walzenmischgeräten.

Die Herstellung der erfindungsgemäßen Formmasse kann aber auch durch intensives Durchmischen von Lösungen der einzelnen Komponenten und anschließendes Eindampfen des Lösungsmittels hergestellt werden. Auch kombinierte Lösungs- und Schmelzemischprozesse, z. B. auf Entgasungsextrudern sind erfolgreich erprobt worden.

Für die Herstellung der erfindungsgemäßen Formmassen wurden die in Tabelle I aufgeführten Copolymerisate $A^1$ bis $A^3$ und gegebenenfalls die in der Tabelle 2 genannten Pfropfkautschuke $B_1$ bis $B_3$ verwendet. Zusammensetzung und weitere Eigenschaften sind in den genannten Tabellen angegeben.

Als Komponente I wurde ein Handelsprodukt auf Basis eines Poly-(2,6-dimethyl-1,4-phenylen)ethers verwendet, das eine Grenzviskosität von 0,5 [dl/g] und eine Kerbschlagzähigkeit von 3 (kJ/m) aufweist.

Tabelle 1 : SMMA- und SMA-Copolymerisate (Bestandteil A)

| Bezeichnung | Zusammensetzung in Gew.-Teilen | | | Kerbschlagzähigkeit | Vicat-Temperatur |
|---|---|---|---|---|---|
| | S | MA | MMA | (kJ/m²) | (°C) |
| $A^1$ | 95 | — | 5 | 3 | 100 |
| $A^2$ | 89 | — | 11 | 4 | 99 |
| $A^3$ | 84 | — | 16 | 4 | 99 |

S = Styrol ;
MMA = Methylmethacrylat.

Die Copolymerisate $A^1$-$A^3$ hatten eine Viskositätszahl von 70 (ml/g), gemessen 0,5 %ig in DMF bei 25 °C.

Tabelle 2 : Pfropfmischpolymerisate (Bestandteil B)

| Bezeichnung | Zusammensetzung des Kautschuks (%) | | Zusammensetzung Pfropfhülle (%) | | | TG |
|---|---|---|---|---|---|---|
| | Bu | BA | S | MMA | AN | (°C) |
| $B_1$ | 100 | — | 90 | 10 | — | – 81 |
| $B_2$ | — | 100 | 90 | 10 | — | – 46 |
| $B_3$ | 50 | 50 | 90 | 5 | 5 | – 67 |

Bu = Butadien,
BA = Butylacrylat,
S = Styrol,
MMA = Methylmethacrylat,
AN = Acrylnitril

Als Komponente III wurde Triphenylphosphat eingesetzt.
Die in den Versuchen und Vergleichsversuchen genannten Parameter wurden wie folgt bestimmt :

1. Die Kerbschlagzähigkeit in (kJ/m²) wurde nach DIN 53 453 an spritzgegossenen Normkleinstäben bei einer Massetemperatur von 250 °C gemessen.

2. Der Elastizitätsmodul in (N/mm²) wurde nach DIN 53 457 an spritzgegossenen Schulterstäben ermittelt

3. a) Die Viskositätszahlen, VZ, in (ml/g) wurden an einer 0,5 %igen Lösung in Dimethylformamid gestimmt.
   b) Grenzviskosität sp/c in [cm³/g] wurde in $CHCl_3$ bei 30 °C gemessen.

4. Der Vicat-Erweichungspunkt in °C wurde nach DIN 53 460, Verfahren B, in Silikonöl bestimmt.

5. Die Tg-Werte der Kautschuke wurden nach K. H. Illers und H. Breuer, Kolloid-Zeitschrift, loc. cit. bestimmt.

6. Der Chemikalienbeständigkeit wurde in einem Schnelltest an Spritzkästchen, die mit Isopropanol gefüllt und 48 h gelagert wurden überprüft und visuell beurteilt :

Note 1 = keine Veränderungen
Note 2 = Oberflächenaufrauhung, Trübung
Note 3 = Verformungen.

Die Erfindung wird nachstehend anhand von Beispielen und Vergleichsversuchen näher erläutert, wobei sich die genannten Teile und Prozente, sofern nichts anderes vermerkt ist, auf das Gewicht beziehen.

Beispiel 1 bis 7, Vergleichsbeispiel I und II

Die in der Tabelle 3 genannten Komponenten $A^n$ und $B_n$ und C wurden in einem Fluidmischer vorgemischt und anschließend auf einem Kokneter bei etwa 220 bis 230 °C unter Stickstoff innig verknetet. Die Verweilzeit betrug etwa 4 Minuten. Das dabei erhaltene Granulat wurde auf einer Einwellen-Extruder-Schnecke aufgeschmolzen und zu gleichmäßigem, für die Spritzgußverarbeitung geeigneten Granulat abgeschlagen. In Tabelle 3 sind die Eigenschaften der Mischungen aufgeführt.

Tabelle 3

| Beispiel | Zusammensetzung (Gew. %) Komponenten | | | Kerbschlag- zähigkeit | Vicat- Temp. | E-Modul | Chemikalien- beständigkeit |
|---|---|---|---|---|---|---|---|
| | I | II | III | (kJ/m²) | (°C) | (N/mm²) | Note |
| 1 | 70 | 30 (100 Tle. $A^1$) | — | 6 | 157 | 3000 | 1 |
| 2 | 70 | 30 (100 Tle. $A^2$) | — | 7 | 157 | 3100 | 1 |
| 3 | 50 | 50 (100 Tle. $A^2$) | — | 7 | 140 | 2900 | 1 |
| 4 | 60 | 40 (75 Tle. $A^1$) (25 Tle. $B_1$) | — | 12 | 148 | 2700 | 1 |
| 5 | 60 | 40 (75 Tle. $A^2$) (25 Tle. $B_2$) | — | 13 | 147 | 2800 | 1 |
| 6 | 60 | 40 (75 Tle. $A^2$) (25 Tle. $B_3$) | — | 13 | 147 | 2800 | 1 |
| 7 | 50 | 40 (75 Tle. $A^2$) (25 Tle. $B_2$) | 10 | 14 | 123 | 2500 | 1 |
| Vergleichsversuch (nicht erfindungsgemäß) | | | | | | | |
| I | 70 | 30 (100 Tle. $A^3$) | — | 3 | 131 | 3100 | 2 |
| II | 60 | 40 (75 Tle. $A^3$) (25 Tle. $B_3$) | — | 7 | 124 | 2800 | 3 |

**Patentansprüche**

1. Thermoplastische Formmassen, enthaltend ein Gemisch aus

(I) 95 bis 5 Gew.% eines Polyphenylenethers und

(II) 5 bis 95 Gew.% eines Copolymerisates, bestehend aus

# 0 149 141

A$_1$) 85 bis 99 Gew.-Teilen eines monovinylaromatischen Monomeren,

A$_2$) 1 bis 15 Gew.-Teilen Methacrylsäurealkylester mit bis zu 8 C-Atomen im Alkylanteil und

B) 0 bis 20 Gew.-Teilen einer Elastomerkomponente mit einer Glastemperatur von ≤ 0 °C, wobei die Gewichtsteile sich auf 100 Gew.-Teile summieren.

2. Thermoplastische Formmasse nach Anspruch 1, dadurch gekennzeichnet, daß als Polyphenylenether I ein Homo- und/oder Copolymerisat des 2,6-Dimethylphenols eingesetzt wird.

3. Thermoplastische Formmasse nach Anspruch 1, dadurch gekennzeichnet, daß das Copolymerisat II ausgewählt ist aus der Gruppe der Styrol-Methylmethacrylat-Copolymerisate und der Butadien-Styrol-Methylmethacrylat- bzw. Styrol-Butylacrylat-Methylmethacrylat-Copolymerisate.

4. Thermoplastische Formmasse nach den Ansprüchen 1 bis 3, dadurch gekennzeichnet, daß die Komponenten I und II im Verhältnis von 30 bis 70 % und 70 bis 30 % eingesetzt werden.

5. Thermoplastische Formmasse gemäß den Ansprüchen 1 bis 4, dadurch gekennzeichnet, daß sie Triarylphosphat enthalten.

6. Verwendung der Formmassen gemäß den Ansprüchen 1 bis 5 zur Herstellung von Formteilen.

## Claims

1. A thermoplastic molding material which contains a mixture of

(I) from 95 to 5 % by weight of a polyphenylene ether, and

(II) from 5 to 95 % by weight of a copolymer consisting of

A$_1$) from 85 to 99 parts by weight of a monovinylaromatic monomer,

A$_2$) from 1 to 15 parts by weight of an alkyl methacrylate, where alkyl is of up to 8 carbon atoms, and

B) from 0 to 20 parts by weight of an elastomer component which has a glass transition temperature of ≤ 0 °C, the sum of the number of parts by weight being 100.

2. A thermoplastic molding material as claimed in claim 1, wherein a homopolymer and/or copolymer of 2,6-dimethylphenol is employed as the polyphenylene ether I.

3. A thermoplastic molding material as claimed in claim 1, wherein the copolymer II is selected from the group consisting of styrene/methyl methacrylate, butadiene/styrene/methyl methacrylate and butyl acrylate/styrene/methyl methacrylate copolymers.

4. A thermoplastic molding material as claimed in claims 1 to 3, wherein components I and II are employed in a ratio of 30 to 70 % : 70 to 30 %.

5. A thermoplastic molding material as claimed in claims 1 to 4, which contains a triaryl phosphate.

6. The use of a molding material as claimed in claims 1 to 5 for the production of molded parts.

## Revendications

1. Matières à mouler thermoplastiques, contenant un mélange de

(I) 95 à 5 % en poids d'un éther de polyphénylène et

(II) 5 à 95 % en poids d'un copolymère se composant de

A$_1$) 85 à 99 parties en poids d'un monomère monovinylaromatique,

A$_2$) 1 à 15 parties en poids d'un ester alkylique d'acide méthacrylique contenant jusqu'à 8 atomes de C dans la partie alkyle,

B) 0 à 20 parties en poids d'un composant élastomère ayant une température de verre inférieure ou égale à 0 °C, le total de ces parties en poids faisant 100 parties en poids.

2. Matière à mouler thermoplastique selon la revendication 1, caractérisée en ce qu'on utilise, en tant qu'éther de polyphénylène I, un homo- et/ou copolymère du 2,6-diméthylphénol.

3. Matière à mouler thermoplastique selon la revendication 1, caractérisée en ce que le copolymère II est choisi dans le groupe des copolymères de styrène-méthacrylate de méthyle et des copolymères de butadiène-styrène-méthacrylate de méthyle ou de styrène-acrylate de butyle-méthacrylate de méthyle.

4. Matière à mouler thermoplastique selon l'une quelconque des revendications 1 à 3, caractérisée en ce que les composants I et II sont utilisés dans une proportion de 30 à 70 % et de 70 à 30 %.

5. Matière à mouler thermoplastique selon l'une quelconque des revendications 1 à 4, caractérisée en ce qu'elle contient un phosphate de triallyle.

6. Utilisation des matières à mouler selon l'une quelconque des revendications 1 à 5 pour la fabrication de pièces moulées.